Europäisches Patentamt

European Patent Office

Office européen des brevets

(19)

(11) EP 0 743 285 B1

(12) FASCICULE DE BREVET EUROPEEN

(45) Date de publication et mention
de la délivrance du brevet:
**28.08.2002 Bulletin 2002/35**

(51) Int Cl.⁷: **C02F 3/16**

(21) Numéro de dépôt: **96460020.9**

(22) Date de dépôt: **15.05.1996**

(54) **Procédé d'aération d'un liquide du type lisier contenu dans un bassin et appareil d'aération pour la mise en oeuvre de ce procédé**

Verfahren zur Belüftung von Gülle in einem Becken und Belüftungsgerät zur Durführung desselben

Process for aerating liquid manure in a basin and aerating device for carrying out the same

(84) Etats contractants désignés:
**BE DE DK GB LU NL**

(30) Priorité: **16.05.1995 FR 9506018**

(43) Date de publication de la demande:
**20.11.1996 Bulletin 1996/47**

(73) Titulaire: **Dreano, Claude**
**56430 Mauron (FR)**

(72) Inventeur: **Dreano, Claude**
**56430 Mauron (FR)**

(74) Mandataire: **Maillet, Alain**
**SCP Le Guen & Maillet,**
**5, Place Newquay,**
**B.P. 70250**
**35802 Dinard Cedex (FR)**

(56) Documents cités:
**FR-A- 2 190 506          US-A- 3 320 160**
**US-A- 3 797 809          US-A- 3 846 517**

• **"Lehr- und Handbuch der Abwassertechnik" ,**
**ABWASSERTECHNISCHE VEREINIGUNG E.V. ,**
**ST. AUGUSTIN-DE XP002038961 * Volume VI,**
**page 19, exemple 3.1.9.5 * * Volume IV, page 338,**
**lignes 13-18; page 340, figure "Bauform Favorit"**
*****

## Description

La présente invention concerne un procédé d'aération d'un liquide du type lisier contenu dans un bassin, ainsi qu'un appareil permettant la mise en oeuvre de ce procédé. Plus généralement, le domaine de l'invention est celui des liquides susceptibles de produire de la mousse en quantité importante lors de leur oxygénation.

L'aération de liquides est couramment employée dans les stations d'épuration d'eau, en pisciculture ou dans le traitement du lisier, par exemple.

Il est connu d'utiliser des procédés d'aération de liquides consistant en une projection radiale de jets au moyen d'une turbine flottante. Cette turbine, entraînée par un moteur électrique, est usuellement constituée par une vis hélicoïdale, ou roue hélico-centrifuge, et elle est montée à l'intérieur d'un tube de guidage, enserré à sa partie supérieure dans un flotteur rempli de mousse, tel que du polyuréthanne expansé. Ce tube de guidage est prolongé à sa partie inférieure par un cône d'aspiration, lequel est pourvu d'une croix stabilisatrice au niveau de sa paroi latérale. Le liquide est propulsé radialement par rotation de la turbine au niveau de l'espace annulaire constitué par l'organe de support du moteur.

Un inconvénient majeur de tels procédés provient de la structure même de ces turbines flottantes. En effet, le liquide aspiré est projeté radialement à la surface même du liquide à aérer, ce qui provoque un brassage important de liquide et l'apparition de grandes quantités de mousse autour de l'appareil d'aération. L'accumulation de mousse à proximité de la turbine peut provoquer un dysfonctionnement de cette dernière et donc interrompre le processus d'oxygénation.

Un but de l'invention est de proposer un procédé d'aération d'un liquide du type lisier contenu dans un bassin, qui empêche la formation de mousse au voisinage de l'appareil d'aération utilisé.

Un autre but de l'invention est de proposer un appareil d'aération qui permette la mise en oeuvre de ce procédé.

A cet effet, un tel procédé consiste à propulser radialement ledit liquide à partir d'un point dudit bassin de manière à créer une gerbe de liquide se présentant sous la forme d'une corolle *dont la portée est proche des parois du bassin.*

Cette forme du jet de liquide propulsé permet de réduire considérablement la formation de mousse à la surface du bassin.

Préférentiellement, le procédé selon l'invention consiste à prévoir un grillage pour briser ladite gerbe.

Un tel grillage, du type brise-lames, permet de protéger la paroi du bassin des projections de liquide.

Selon une autre caractéristique de l'invention, l'appareil d'aération, qui comprend un moteur dont le rôle est d'entraîner une turbine prévue pour propulser radialement à sa sortie ledit liquide et un dispositif de déviation de liquide *constitué d'une conduite annulaire sensiblement tronconique tournée vers le haut et de section sensiblement constante et alignée sensiblement avec l'axe vertical de la turbine dont l'entrée se trouve à la sortie de la turbine,* ladite conduite annulaire ayant la paroi inférieure inclinée, l'ensemble étant monté sur un flotteur.

La paroi inférieure *est prolongée par un/L déflecteur formant un angle positif avec l'horizontale".*

La section de ladite conduite annulaire est sensiblement constante, et sa paroi inférieure est constituée de plusieurs tronçons d'inclinaison décroissante *par rapport à l'horizontale.*

La géométrie de cette conduite annulaire permet de propulser radialement le liquide suivant une gerbe ayant la forme d'une corolle.

Préférentiellement, l'appareil d'aération comporte un dispositif d'amarrage constitué d'un mât vertical pouvant coulisser dans un tube vertical monté solidaire dudit bassin, les parties supérieure et inférieure dudit tube étant reliées aux parois dudit bassin par une pluralité de haubans prévus pour le maintenir vertical.

Ce dispositif d'amarrage assure ainsi la stabilisation de l'appareil d'aération.

Avantageusement, des haubans sont pourvus de tendeurs.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue latérale et en coupe de l'appareil d'aération en fonctionnement conformément au procédé d'aération selon l'invention,
la Fig. 2 est une vue latérale et en coupe du dispositif de déviation de l'appareil d'aération selon l'invention permettant la mise en oeuvre de ce procédé, et
la Fig. 3 est une vue latérale et en coupe de l'appareil d'aération selon l'invention pourvu d'un dispositif d'amarrage.

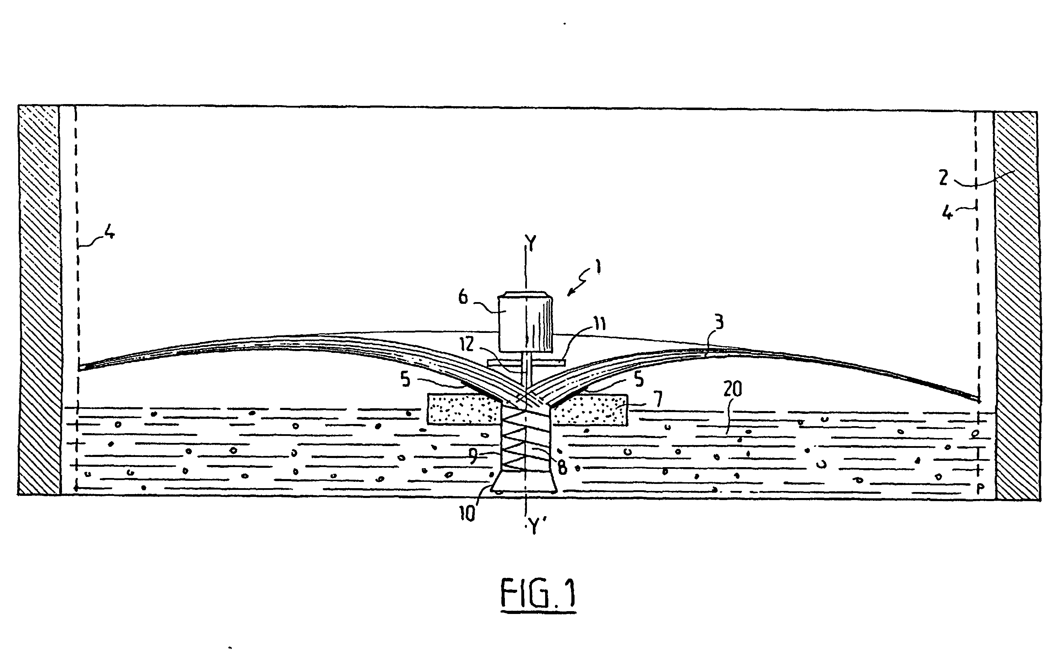

Un appareil d'aération 1 permettant la mise en oeuvre du procédé d'aération selon l'invention est représenté à la Fig. 1 en fonctionnement. Cet appareil 1 se compose essentiellement d'un moteur 6 électrique, dont l'arbre 12 est dirigé vers le bas et entraîne une turbine 8 logée dans un tube de guidage 9. Cet appareil d'aération 1 est monté sur au moins un flotteur 7 et comporte un dispositif de déviation 5 des liquides 20. Le tube de guidage 9 de ladite turbine 8, relié à sa partie supérieure au flotteur 7, est de type cylindrique et il se termine à sa partie inférieure par un cône d'aspiration 10 du liquide 20. La partie supérieure de la turbine 8, qui dépasse légèrement du bord supérieur du flotteur 7, se situe au niveau du dispositif de déviation 5 du liquide 20, qui coïncide à sa partie supérieure avec la bride 11 supportant le moteur 6.

Le moteur 6 étant en marche, la vis sans fin 8 tourne autour de son axe Y'Y et projette radialement le liquide 20 à l'intérieur du dispositif de déviation 5.

L'appareil d'aération 1 peut être idéalement utilisé au centre de la surface d'un bassin 2, en béton par exemple, et de dimension avoisinant une dizaine de mètres. Le procédé selon l'invention permet d'obtenir une gerbe fine 3 de liquide se présentant sous la forme d'une corolle, aplatie et de grande surface. Cette gerbe 3 est donc parfaitement enrichie en air avant d'entrer en contact avec le liquide 20 du bassin 2, ce qui assure une bonne oxygénation de ce liquide 20. De plus, compte tenu de son profil de trajectoire parabolique, la gerbe 3 de liquide 20 n'entre en contact avec le liquide 20 à aérer que sur un plan annulaire de faible dimension, assimilable à un cercle. La formation de mousse due aux remous est ainsi fortement réduite, notamment à proximité du flotteur 7 et de la turbine 8, ce qui permet d'éviter tout dysfonctionnement de l'appareil d'aération 1. Comme on peut le voir sur cette Fig., une telle gerbe 3 peut avoir une portée considérable, proche des parois du bassin 2.

On peut protéger la paroi du bassin 2 des projections de liquide 20 en prévoyant à l'intérieur dudit bassin 2 un grillage 4 du type brise-lames, ce grillage 4 étant préférentiellement situé à proximité immédiate de ladite paroi. La gerbe 3 de liquide 20 se brise à la surface du grillage 4 pour finalement atteindre la paroi du bassin 2 sous la forme d'un jet d'une consistance moindre et d'une puissance atténuée.

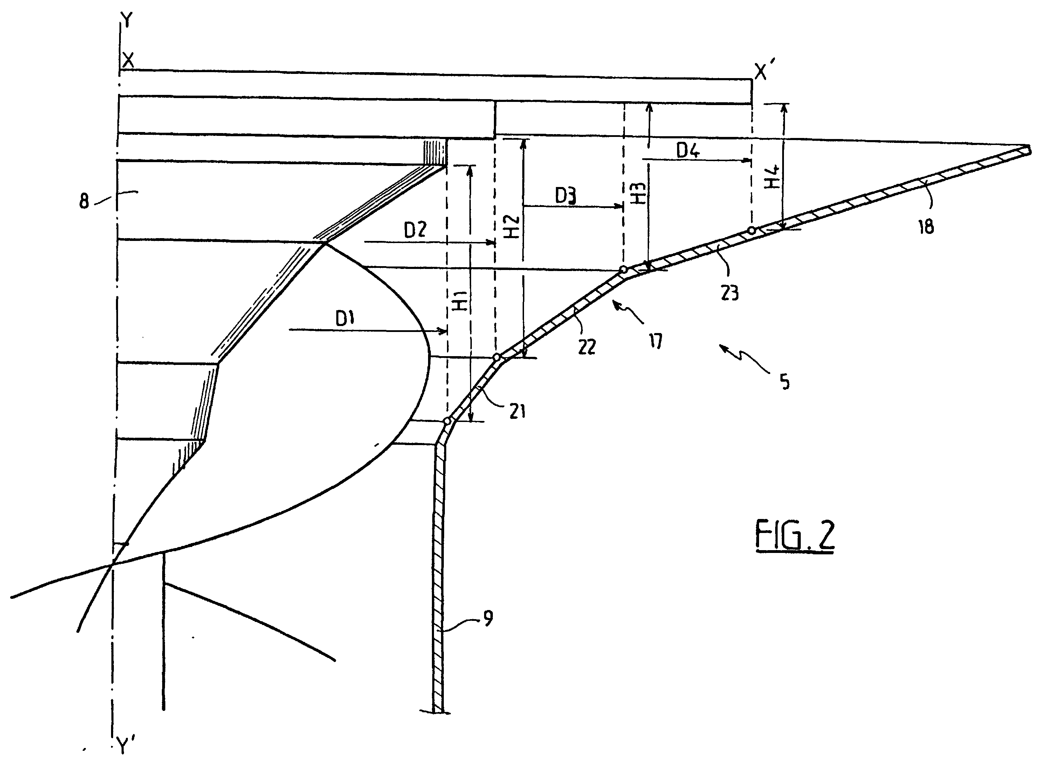

Le dispositif de déviation 5 de l'appareil d'aération 1 selon l'invention permettant la mise en oeuvre du procédé précité est représenté à la Fig. 2. *Il est constitué d'une conduite annulaire sensiblement tronconique tournée vers le haut et de section sensiblement constante et alignée sensiblement avec l'axe vertical de la turbine dont l'entrée se trouve à la sortie de la turbine 8* en l'occurrence une vis sans fin. Cette conduite comporte une paroi supérieure qui s'étend de la partie supérieure de la vis 8 à la bride 11 supportant le moteur 6, ainsi qu'une paroi inférieure 17 s'étendant en prolongement du tube vertical cylindrique de guidage 9 de la vis 8. Cette dernière paroi 17 se compose quant à elle de plusieurs tronçons tronconiques coaxiaux. Dans cet exemple de réalisation figurent trois tronçons 21, 22, 23, d'inclinaison décroissante par rapport à l'horizontale; à titre indicatif, le premier tronçon 21 est incliné de 50° par rapport à l'horizontale, le second 22 de 35° et le troisième 23 de 20°. Ces tronçons 21, 22, 23 sont tels que la section de la conduite annulaire est sensiblement constante. En effet, si l'on appelle D1, D2, D3, D4 les diamètres aux extrémités des trois tronçons 21, 22, 23 de l'axe Y'Y de la vis 8, et H1, H2, H3, H4 les hauteurs de passage du liquide 20 correspondant aux extrémités précitées, on a les égalités suivantes:

$$pD1H1 = pD2H2 = pD3H3 = pD4H4.$$

Par conséquent, les surfaces des sections de passage ne varient pas d'un tronçon à l'autre, ce qui se traduit par une forme d'hyperboloïde de révolution autour de l'axe Y'Y pour ladite paroi inférieure 17, après lissage des tronçons 21, 22, 23.

De plus, la paroi inférieure 17 de ladite conduite annulaire est prolongée par un déflecteur 18 qui prolonge le troisième tronçon 23 *formant un angle positif avec l'horizontale* et constitue ainsi un guide pour le liquide 20 dévié le long des trois tronçons 21, 22, 23.

La géométrie de cette paroi inférieure 17 permet de conserver une vitesse de liquide 20 constante au niveau des trois tronçons 21, 22, 23. Pour ce faire, ledit déflecteur 18 doit avoir une largeur déterminée comme suit: si l'on considère un quelconque axe radial et horizontal X'X pour l'évaluation de la projection des largeurs des tronçons 21, 22, 23 précités, on peut noter que ledit déflecteur 18 est 1,25 à 2 fois plus court que les trois tronçons 21, 22, 23 réunis.

Cette configuration permet donc de supprimer l'inconvénient de la perte de charge au niveau du dispositif de déviation 5, les vitesses du liquide 20 à l'entrée et à la sortie de la conduite annulaire étant identiques. Par ailleurs, on observe que la puissance consommée par le moteur 6 de l'appareil d'aération 1 selon l'invention est réduite de moitié par rapport aux appareils usuels, ceci pour l'obtention d'une aération satisfaisante dans le bassin 2.

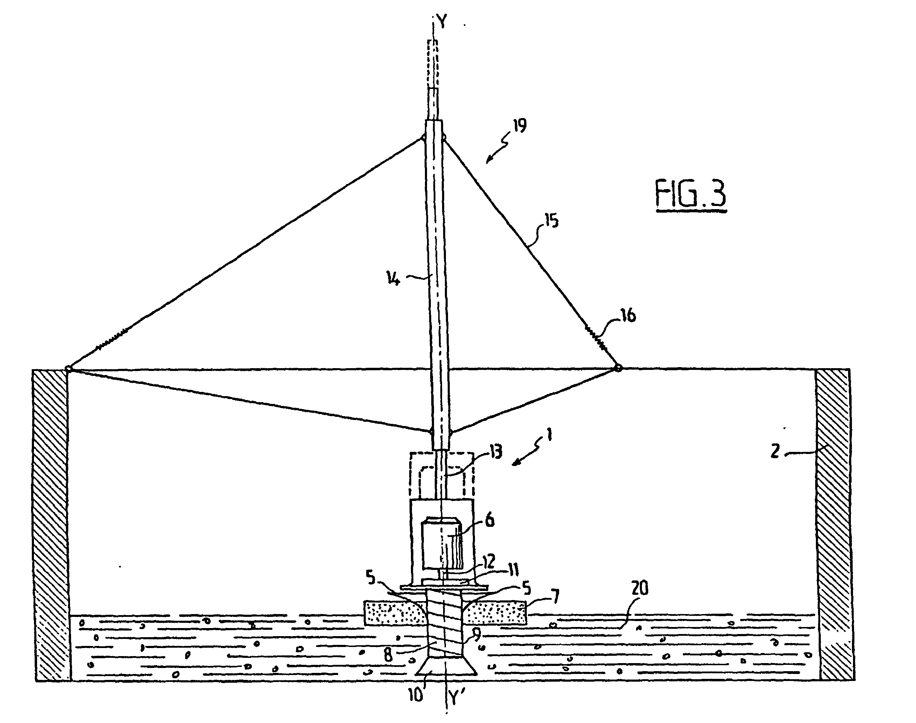

L'appareil d'aération 1 selon l'invention représenté à la Fig. 3 se distingue de celui représenté à la Fig. 1 en ce qu'il comporte en outre un dispositif d'amarrage 19 de l'appareil 1 aux parois du bassin 2. Ce dispositif d'amarrage 19, dont le rôle est de stabiliser l'appareil d'aération 1, est constitué par un mât 13 vertical relié audit appareil 1 au niveau de l'étrier du moteur 6, ledit mât pouvant coulisser dans un tube vertical 14 monté solidaire du bassin 2. La hauteur de ce tube vertical 14 peut être réglée en fonction du niveau de liquide 20 dans le bassin 2, auquel sont accrochés deux systèmes supérieur et inférieur de haubans 15, reliés à leur autre extrémité aux parties supérieure et inférieure dudit tube 14. Chaque système consiste en un agencement de trois haubans 15 espacés l'un par rapport à l'autre de 120 degrés. Certains haubans 15 peuvent avantageusement être pourvus d'un tendeur 16.

L'appareil d'aération 1 selon l'invention est ainsi correctement stabilisé, étant bien amarré aux parois du bassin 2. Ce double système 19 de haubans 15 remplace avantageusement l'ensemble connu de l'art antérieur, constitué par un seul système de câbles horizontaux, peu stable, et une croix stabilisatrice prolongeant le cône d'aspiration 10 à sa partie inférieure. Le double système de stabilisation 19 selon l'invention présente donc de meilleures garanties de stabilité et son coût de fabrication est moindre.

**Revendications**

1. Appareil d'aération (1) d'un liquide (20) du type lisier contenu dans un bassin (2), ledit appareil comprenant un moteur (6) dont le rôle est d'entraîner une turbine (8) prévue pour propulser radialement à sa sortie ledit liquide (20) et un dispositif de déviation (5) de liquide (20) constitué d'une conduite annulaire sensiblement tronconique tournée vers le haut, de section sensiblement constante et alignée sensiblement avec l'axe vertical de la turbine dont l'entrée se trouve à la sortie de la turbine (8), ladite conduite annulaire ayant sa paroi inférieure inclinée (17), l'ensemble étant monté sur un flotteur (7), **caractérisé en ce que** la paroi inférieure (17) est prolongée par un déflecteur (18) formant un angle positif avec l'horizontale.

2. Appareil d'aération (1) selon la revendication 1, **caractérisé en ce que** la paroi inférieure (17) de ladite conduite est constituée de plusieurs tronçons (21, 22, 23) d'inclinaison décroissante par rapport à l'horizontale.

3. Appareil d'aération (1) selon la revendication 2, **caractérisé en ce que** ledit déflecteur (18) prolonge le dernier tronçon (23) selon la même inclinaison.

4. Appareil d'aération (1) selon l'une des revendications 1 à 3, **caractérisé en ce qu'**il comporte un dispositif d'amarrage (19) constitué d'un mât vertical (13) pouvant coulisser dans un tube vertical (14) monté solidaire dudit bassin (2).

5. Appareil d'aération (1) selon la revendication 4, **caractérisé en ce que** les parties supérieure et inférieure dudit tube (14) sont reliées aux parois dudit bassin (2) par une pluralité de haubans (15) prévus pour le maintenir vertical.

6. Appareil d'aération (1) selon la revendication 5, **caractérisé en ce que** des haubans (15) sont pourvus de tendeurs (16).

7. Procédé d'aération d'un liquide (20) du type lisier contenu dans un bassin (2), mis en oeuvre par un appareil d'aération selon l'une des revendications précédentes, **caractérisé en ce qu'**il consiste à propulser radialement ledit liquide (20) à partir d'un point dudit bassin (2) de manière à créer une gerbe (3) de liquide se présentant sous la forme d'une corolle dont la portée est proche des parois du bassin.

8. Procédé d'aération selon la revendication 7, **caractérisé en ce qu'**il consiste à prévoir un grillage (4) pour briser ladite gerbe (3).

**Patentansprüche**

1. Gerät (1) zur Belüftung einer Flüssigkeit (20), wie beispielsweise in einem Bassin enthaltene Gülle (2), wobei das Gerät einen Motor (6) zum Antrieb einer Turbine (8) enthält, die dazu bestimmt ist, die Flüssigkeit (20) bei ihrem Austreten radial zu versprühen, und eine Vorrichtung zur Ablenkung (5) von Flüssigkeit (20), die aus einer deutlich kegelstumpfförmigen, nach oben gerichteten Ringleitung mit konstantem Querschnitt besteht und mit der Vertikalachse der Turbine ausgerichtet ist, und deren Eingang sich am Ausgang der Turbine (8) befindet, wobei die Ringleitung eine geneigte untere Wand (17) besitzt, wobei die gesamte Vorrichtung auf einem Schwimmer (7) montiert ist, **dadurch gekennzeichnet, dass** die untere Wand (17) durch ein Ablenkblech (18) verlängert ist, das einen positiven Winkel mit der Horizontalen bildet.

2. Belüftungsgerät (1) nach Anspruch 1, **dadurch gekennzeichnet, dass** die untere Wand (17) der Leitung aus mehreren Abschnitten (21, 22, 23) mit abnehmender Neigung in Bezug auf die Horizontale besteht.

3. Belüftungsgerät (1) nach Anspruch 2, **dadurch gekennzeichnet, dass** das Ablenkblech (18) den letzten Abschnitt (23) mit der gleichen Neigung verlängert.

4. Belüftungsgerät (1) nach einem der Ansprüche 1 bis 3, **dadurch gekennzeichnet, dass** es eine Ankopplungsvorrichtung (19) umfasst, die aus einem vertikalen Mast (13) besteht, der in einem fest. mit dem Bassin (2) verbundenen vertikalen Rohr (14) gleiten kann.

5. Belüftungsgerät (1) nach Anspruch 4, **dadurch gekennzeichnet, dass** das obere und untere Teil des Rohres (14) mit den Wänden des Bassins (2) über eine Mehrzahl von Spannseilen (15) verbunden sind, um dieses vertikal zu halten.

6. Belüftungsgerät (1) nach Anspruch 5, **dadurch gekennzeichnet, dass** die Spannseile (15) mit Spanngliedern (16) versehen sind.

7. Verfahren zur Belüftung einer Flüssigkeit (20), wie beispielsweise in einem Bassin (2) enthaltene Gülle, welches mit einem Belüftungsgerät nach einem der vorhergehenden Ansprüche arbeitet, **dadurch gekennzeichnet, dass** es die Flüssigkeit (20) von einem Punkt des Bassins (2) aus radial versprüht, derart dass ein Flüssigkeits-Schauer (3) in Form einer Blumenkrone entsteht, deren Reichweite sich bis nahe an die Wände des Bassins erstreckt.

**8.** Belüftungsverfahren nach Anspruch 7, **dadurch gekennzeichnet, dass** ein Gitter (4) zum Brechen des Schauers (3) vorgesehen ist.

**Claims**

**1.** Aeration apparatus (1) for aerating a liquid (20) of the slurry type contained in a tank (2), said apparatus comprising a motor (6), the role of which is to drive a turbine (8) provided to propel said liquid (20) radially at its outlet, and a device (5) for deflecting the liquid (20), which device is formed from an annular, upwardly turned conduit which is substantially in the form of a truncated cone, said conduit having a substantially regular cross-section and being aligned substantially with the vertical spindle of the turbine, the inlet of which spindle is situated at the outlet of the turbine (8), said annular conduit having its lower wall (17) inclined, and the whole assembly being mounted on a float (7), **characterised in that** the lower wall (17) is extended by a deflector (18) which forms a positive angle with the horizontal.

**2.** Aeration apparatus (1) according to claim 1, **characterised in that** the lower wall (17) of said conduit is formed from a plurality of sections (21, 22, 23) of decreasing inclination relative to the horizontal.

**3.** Aeration apparatus (1) according to claim 2, **characterised in that** said deflector (18) extends the last section (23) at the same inclination.

**4.** Aeration apparatus (1) according to one of claims 1 to 3, **characterised in that** it includes a securing device (19), which is formed from a vertical mast (13) slidable in a vertical tube (14) mounted with said tank (2).

**5.** Aeration apparatus (1) according to claim 4, **characterised in that** the upper and lower portions of said tube (14) are connected to the walls of said tank (2) via a plurality of stays (15) which are provided to keep said tube vertical.

**6.** Aeration apparatus (1) according to claim 5, **characterised in that** some stays (15) are provided with tensioning means (16).

**7.** Method of aerating a liquid (20) of the slurry type contained in a tank (2), which method is accomplished by an aeration apparatus according to one of the preceding claims, **characterised in that** it comprises propelling said liquid (20) radially from one point of said tank (2) so as to create a spray (3) of liquid which is in the form of a corolla, the range of which is close to the walls of the tank.

**8.** Aerating method according to claim 7, **characterised in that** it comprises providing a lattice-like grid (4) to interrupt said spray (3).

FIG.1

EP 0 743 285 B1

FIG. 2

EP 0 743 285 B1

FIG.3

EP 0 743 285 B1